# EUROPEAN PATENT SPECIFICATION

(11) **EP 4 610 141 B1**
(45) Date of publication and mention of the grant of the patent: **25.11.2026**
(21) Application number: 25189977.9
(22) Date of filing: 10.06.2022
(51) Int. Cl.: B60P 1/64, B60P 3/12, B62B 3/02

(54) **ROLL-OFF CONTAINER FOR THE TREATMENT OF DAMAGED VEHICLES**
ABROLLBEHÄLTER ZUR BEHANDLUNG VON BESCHÄDIGTEN FAHRZEUGEN
RÉCIPIENT À DÉROULEMENT POUR LE TRAITEMENT DE VÉHICULES ENDOMMAGÉS

(30) Priority: 14.06.2021 IT 202100015500
(43) Date of publication of application: 03.09.2025
(62) Document number(s) of the earlier application(s) in accordance with Art. 76 EPC: 22178452.3 / 4 105 077
(73) Proprietor: IVECO S.P.A., 10156 Torino (IT)
(72) Inventor: AIMO BOOT, Marco, 10156 Torino (IT); SANTORO, Francesco, 10156 Torino (IT)
(74) Representative: Fiume, Orazio

(56) References cited:
- EP-A1- 2 281 716
- EP-A1- 2 676 894
- EP-A1- 3 263 402
- AT-U1- 11 969
- DE-U1- 202016 005 364
- KR-A- 20040 000 371
- KR-A- 20160 020 769
- NL-C2- 2 012 188

## Description

### Field of the invention

The present invention relates to a roll-off container for the treatment of out of order vehicles, in particular electrified out of order vehicles.

An electrified vehicle is an electric or hybrid vehicle, i.e. a vehicle that has a battery pack for propelling the same vehicle. EP2281716 and AT 11 969 U1 disclose the features of the preamble of claim 1.

### State of the art

EP3263402 discloses a roll-off container, for decanting or ISO, for the treatment of damaged vehicles, in particular damaged electrified vehicles, comprising a bottom and several side walls that have a receiving area for the vehicle and define a closable opening for transferring the vehicle in or out of the receiving area, a winch arranged on the container, in particular a cable winch, to tow the vehicle into the container, and a number of connections for the introduction and/or discharge of the refrigerant or extinguishing agent into the receiving area.

In any case, it is an elongated container that identifies two long sides and two short sides.

From an examination of the description, it is evident that the aforementioned connections are of a hydraulic nature referring to the refrigerant or extinguishing agent. The same document provides that, preferably, an infrared camera/video camera may be installed above one of the sides of the container as well as a lighting system to facilitate night operations.

The ISO type roll-off containers have a predetermined size. They can reach 7 meters and generally have a width not exceeding 2.5 m.

These dimensions cannot be exceeded, as they would make the heavy vehicle carrying them a special vehicle, with considerable circulation problems on public roads.

From these dimensions it is necessary to subtract the thickness of the container walls, therefore the internal volume is further reduced.

The trend towards hybrid and electrified vehicles is also extending to industrial vehicles over 3.5 tons, which easily exceed 6 meters in length and 2.2 meters in width. It is also clear that in the event of an impact, an industrial vehicle can be deformed by increasing the width. It becomes difficult if not impossible to store an industrial vehicle equipped with one or more battery packs in a roll-off container to avoid the thermal drift of each battery pack by flooding the container.

If not specifically excluded in the detailed description that follows, what is described in this chapter is to be considered as an integral part of the detailed description.

### Summary of the invention

The object of the present invention is to provide a container for damaged electrified vehicles equipped with a battery system at risk of thermal drift which are larger than those that can be offered by roll-off ISO containers. The basic idea of the present invention is to make an expandable container at least transversely with respect to the longitudinal development of the container, so as to be able to accommodate industrial vehicles and possibly even buses.

According to the present invention, the container comprises two portions, a right portion and a left portion, one sliding inside the other in a transverse direction with respect to the longitudinal development of the container. The edges of the right portion and the edges of the left portion are folded in such a way that when the container is in a fully extended condition, the folded portions of the edges compress a gasket providing a hydraulic seal.

Both the left and the right portions define a continuous border that extends from the rear opening wall to the front wall passing through the bottom.

A single gasket can be associated with the portion of the edge that includes the front wall and the bottom, while the rear wall, being openable, comprises a set of gaskets associated with all the moving edges of the doors.

The container can be made in such a way as to have a modest extensibility, for example of 30 - 40 cm, as this is sufficient to accommodate most industrial vehicles. The extension and maintenance of the condition of complete extension is obtained by means of two or more hydraulic jacks interposed between the two portions of the container, for example, the cylinder of the jack is fixed to the left side, while the stem is fixed to the right side of the container.

According to the invention, the bottom of the right portion of the container is not flat but has an emerging, raised longitudinal part, so that in the condition of expansion of the container, the vehicle introduced into the receiving area is level.

According to a preferred variant of the invention, the container can also be extended longitudinally. In particular, in the container as described above, hereinafter referred to as the "front portion", an additional container is arranged, hereinafter referred to as the "rear portion" which differs from the previous one only in that it has no front wall or is equipped with front and rear walls where both can be opened with two doors. When a particularly long vehicle, such as a city bus, must be "observed" to avoid the thermal drift of the relative battery pack, both containers are unloaded and when they are placed on the ground, they are made so that in an extended condition they have equal transversal extension. They can therefore be interconnected with special tie rods, with a special interface gasket interposed in order to ensure the seal, in order to be able, as described above, to introduce the damaged vehicle into the receiving area. According to the present invention, after the container has been used, both the front and rear portions are retracted and the rear portion is repositioned inside the front one to be reloaded on the container heavy vehicle equipped with a hydraulic or electro-hydraulic extendable arm.

A rope can be operated using the arm of the container vehicle to tow the damaged vehicle inside the receiving area. In other words, the arm of the container vehicle, after unloading the container, is hooked to the rope used to force the damaged vehicle to enter the container receiving volume.

Alternatively, a winch fixed to the front portion of the container can be used.

The same arm of the container vehicle or the same winch can be used to bring the rear portion of the container back into the front portion, after using the extendable container.

The dependent claims describe preferred variants of the invention, forming an integral part of this description.

### Brief description of the figures

Further objects and advantages of the present invention will become clear from the following detailed description of an example of its embodiment (and its variants) and from the attached drawings given purely by way of non-limiting explanation, in which:
Figs. 1a and 1b show two operating conditions, retracted and unfolded, of an example of container according to the present invention;
Fig. 2 shows a perspective view of a portion of the container according to Figure 1a;
Fig. 3 shows a perspective view of the portion of the container according to Fig. 2 in an exploded condition;
Fig. 4 shows a detail of the container of the previous figures, according to the extended condition of figure 1b;

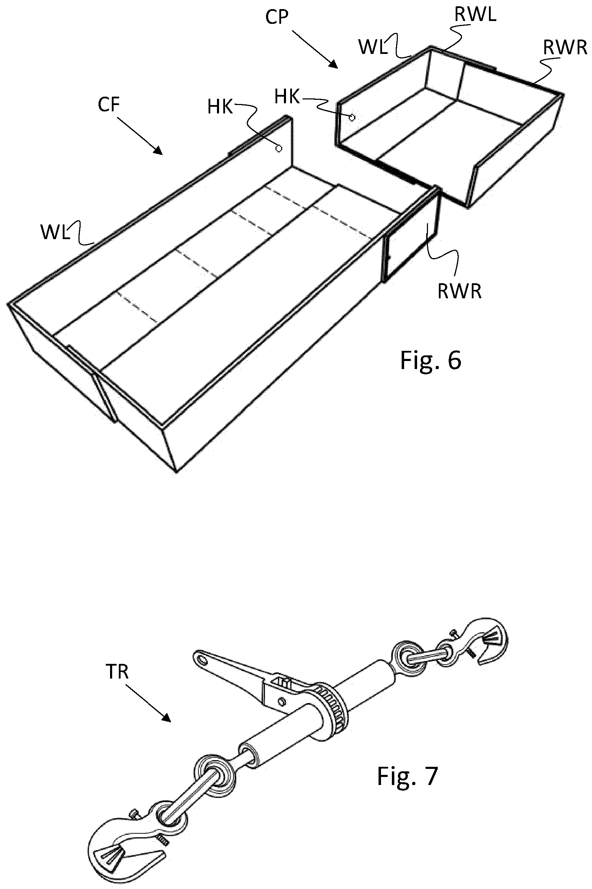

Figs. 5 and 6 show perspective views of a further preferred variant of the container according to the present invention,
Fig. 7 discloses a rod to pull a portion against another portion so that the respective bottoms and side walls are seamless,
Fig. 8 shows a system for introducing a vehicle into a container receiving area according to any of the previous variants;
Fig. 9 shows a system for introducing a vehicle into a container receiving area according to any of the variants of figures 1 to 7.

The same reference numbers and letters in the figures identify the same elements or components or functions.

It should be noted that the terms "first", "second", "third", "upper", "lower" and the like can be used here to distinguish various elements. These terms do not imply a spatial, sequential or hierarchical order for the modified elements unless specifically indicated or inferred from the text.

The elements and features illustrated in the various preferred embodiments, including the drawings, can be combined with each other without however departing from the scope of this application as described below.

### Detailed description of exemplary embodiments

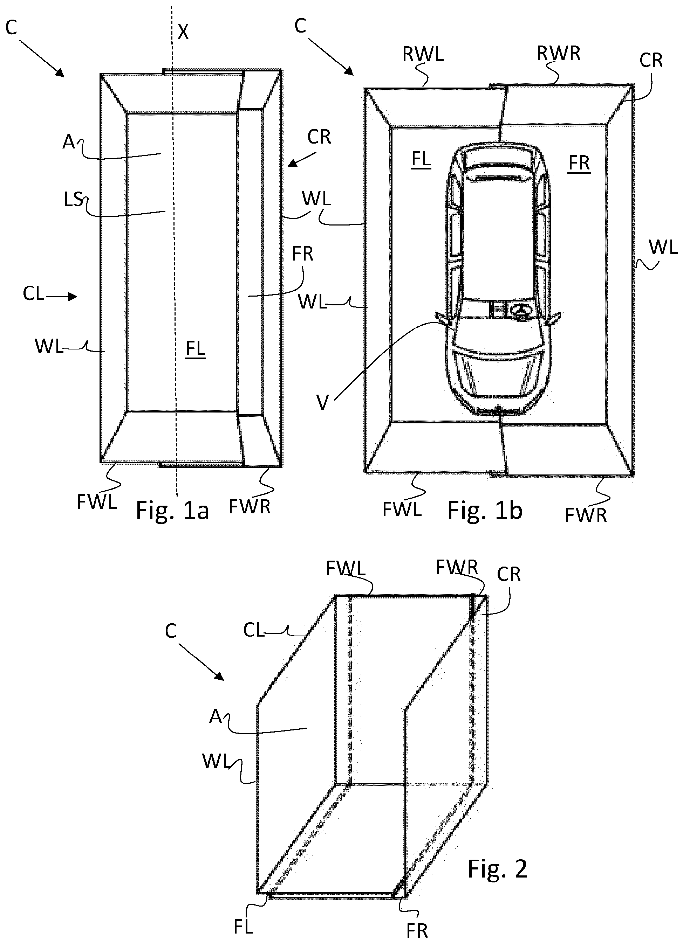

With reference to figures 1a, 1b and 2, an example of container C according to the present invention is shown.

It is specifically adapted for the treatment of damaged vehicles, in particular damaged electrified vehicles.

The container comprises a bottom F and several perimeter walls WL, FWL, RWL which define a volume A for receiving a damaged vehicle V and wherein the container has a longitudinal shape defining a longitudinal direction X with a pair of side walls WL, a front wall FWL and a rear wall RWL which defines a closable opening to transfer the damaged vehicle into or out of the receiving volume A.

The peculiarity of the container of the present invention is the fact that it can be extended in a transverse direction with respect to the longitudinal direction.

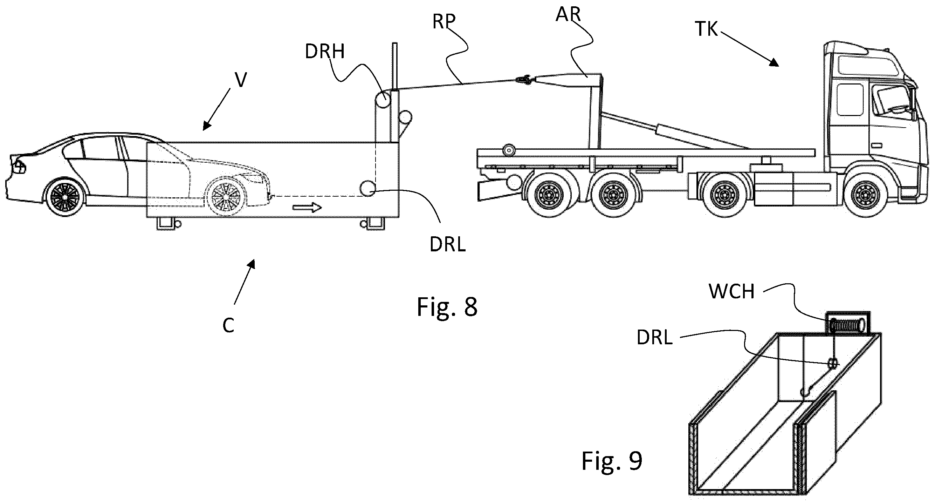

If we consider figure 8, and take into account that the container can be loaded or unloaded from the container vehicle TK, the front wall FWL of the container is intended to face the cabin of the container vehicle.

The container includes a right portion CR and a left portion CL, one sliding inside the other according to the transverse direction.

When the container is placed on the ground and the process of transversal extension begins, it is evident that the external portion remains stationary, while the internal portion extends to the condition of complete extension which is maintained throughout the use phase.

Each portion, right and left, comprises a bottom, a side wall, a front wall. Depending on the circumstances, each of them may also include a back wall.

Thus, in the retracted configuration, in which the right (or left) portion is inserted in the left (or right) portion, the edge BR of the bottom of one portion overlaps the bottom of the other portion and thus also the edge of the front wall of the other portion overlaps the front wall of the other portion.

Such edges are therefore referred to as overlapping edges. In the extended configuration, the overlapping edges BR of the right portion are proximal with the overlapping edges BL of the left portion. They are folded in such a way that, in the extended condition of the container, they compress a gasket (G) arranged between them, creating a seal.

The right portion and the left portion are interconnected by means of sliding guides associated at least to the bottom. At least one hydraulic or electric or electro-hydraulic actuator is associated with the container to allow it to extend and retract.

The sliding guides are made in such a way as not to interfere with the overlapping edges, so that these can mutually interfere with the gasket specifically interposed to make a seal.

The at least one actuator can define one of said sliding guides having a first end stably connected to the left portion and a second end, opposite to the first end, stably connected to the right portion of the container.

It is evident that also the front wall of the left portion can be interconnected by means of sliding guides to the front wall of the right portion, as described for the bottom.

The rear wall of the container can obviously be opened to allow the damaged vehicle to enter the receiving area and be extracted from it.

Preferably, the rear wall is divided into two doors with sealing gaskets. The RWR doors that define the rear wall are equipped with hinges that allow them to be overlapped on the side walls WL of the container. This is particularly useful in the situations described below.

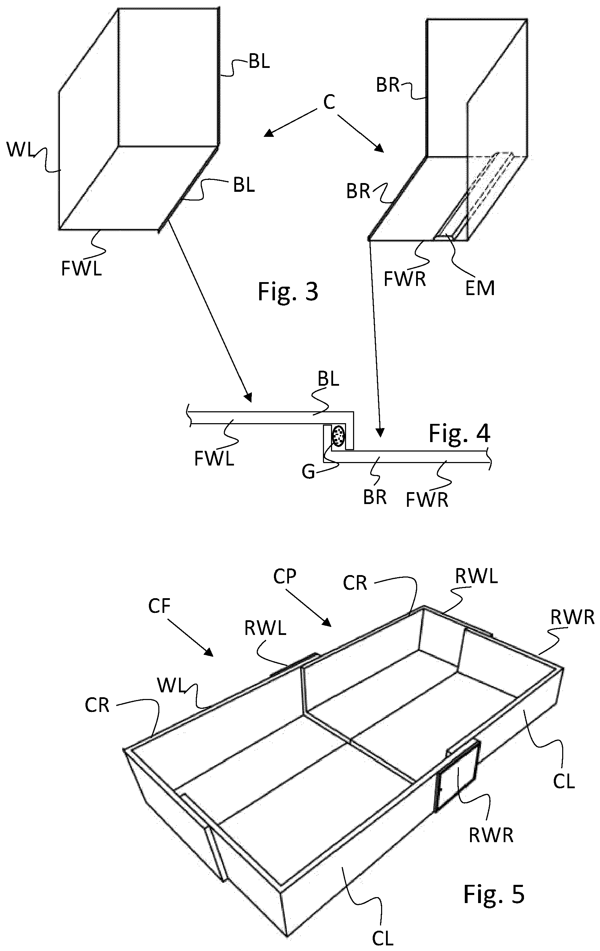

According to a preferred variant of the invention, which is combined with any of the previous variants, the external portion, for example the right one in Figure 3, comprises a longitudinal portion EM emerging in the receiving volume so as to define a horizontal support plane for the damaged vehicle.

The emerging part, in other words, allows to recover the uneven flow due to the overlapping of the two portions FR, FL of the bottom F.

It must be clear that even if the two right CR and left CR portions of the container are shown as two halves of the container, one can be larger than the other. For example, it can be considered to have achieved a remarkable result if the container is capable to reach an internal width, in a transversal sense, of 3 meters.

According to Figure 8, the container comprises a first deflection roller DRH arranged approximately on the upper edge of the front wall FWL and a second deflection roller DRL associated in a lower part of the front wall inside the receiving volume, so as to be able to place a tow rope RP between the first and second rollers and allow a damaged vehicle to be towed inside the receiving volume.

The second roller is arranged in such a way as to allow the vehicle to be towed parallel to the bottom F of the container.

According to a preferred method of using the container, the same arm AR of the container carrier vehicle TK is used, arranged for the transport of the roll-off container, to move the tow rope.

In particular, the towing rope RP is connected to the arm after the container has been unloaded, therefore a retraction of the arm induces a retraction of the rope. If this is previously connected to a vehicle V, this can be towed inside the receiving volume A.

This is particularly advantageous, since it is not necessary to feed a winch on board the container. Alternatively, a winch associated with a tow truck or any vehicle equipped with a winch can be used.

According to a further preferred variant of the invention, the container can be longitudinally extensible in addition or as an alternative to the transverse extension described above.

Preferably, when the container is longitudinally extendable, it comprises a front portion CF and a rear portion CP, in which at least the rear portion is transversely extendable according to any of the variants described above. The rear portion of the container has no front wall or is equipped with a front wall that can be opened, for example by means of two doors which overlap the relative side walls. The rear portion of the container is made in such a way that it can be associated with the front portion to form a single container with a single receiving volume, capable of containing with a certain tightness the extinguishing and/or refrigerant liquid.

Each of the front and rear portions are equipped with slotted hooks HK associated with the respective side walls WL and in which the container is equipped with at least one tie rod TR for hooking the hooks and pulling the front portion against the rear portion so that the respective bottoms and the side walls are seamless.

According to a preferred aspect of the present invention, the composition of the container by means of the front and rear portions, includes the following steps:
- Opening the rear wall RWR, RWL,
- lifting of the front portion of the container by means of an arm AR of the container vehicle, so as to induce the rear portion to slide out of the front portion and simultaneous advancement of the container vehicle,
- unloading of the front portion so that the front portion of the container is aligned and proximal to the rear portion,

- transversal expansion of the rear portion of the container so as to have the same width as the front portion of the container,
- connection of the front portion to the rear portion by means of at least one tie rod TR so that the respective bottoms and the respective side walls are seamless, guaranteeing also the hydraulic seal,
- opening of the doors RWL, RWR defining the rear wall of the rear portion of the container to allow entry of the damaged vehicle V into the receiving volume A;
- introduction of the damaged vehicle V into the receiving volume.

The fact that the rear portion of the container is provided with the front and openable wall is advantageous since, in this way, the front and rear portions of the container can be used independently of each other, each defining a receiving volume to accommodate damaged vehicles. According to a preferred aspect of the invention, a method of recovering a container by means of a TK container vehicle is described, according to the following steps:
- disconnection of the front portion from the rear portion of the container,
- transverse retraction of at least the rear portion,
- closing with mutual overlapping of the doors RWL, RWR defining the rear wall of the rear portion CP of the container,
- insertion of the rear portion of the container into the respective front portion,
- closing with mutual overlapping of the doors RWL, RWR defining the front wall CF of the rear portion of the container,
- recovery of the front portion, while the rear portion is inserted into the front portion, by means of the arm of a container vehicle TK.

The damaged vehicle as well as the rear portion of the container can be inserted into the front portion by means of a tow rope RP associated
- to the winch WCH, described above, or
- to the arm RM of the container vehicle or to a winch of a tow truck being the rope associated with a first deflection roller DRH and a second deflection roller DRL arranged respectively in an upper and lower part of the front wall of the front portion CF of the container C so as to pull the vehicle or the rear portion of the container parallel to the ground and the bottom.

Implementation variants of the described non-limiting example are possible, without however departing from the scope of protection of the present invention, including all the equivalent embodiments for a person skilled in the art, to the content of the claims.

From the above description, the person skilled in the art is able to realize the object of the invention without introducing further construction details.

## Claims

1. A roll-off container (C) for the treatment of damaged vehicles, in particular damaged electrified vehicles, comprising a bottom (F) and several perimeter walls (WL, FWL, RWL) that define a volume (A) for receiving a vehicle damaged (V) and wherein the container has a longitudinal shape defining a longitudinal direction (X) with a pair of side walls (WL), a front wall (FWL) and a rear wall (RWL) which defines a closable opening to transfer the damaged vehicle inside or outside the volume (A), the container being extensible in a direction transverse to said longitudinal direction and wherein the right portion and the left portion comprise sliding guides incorporated or connected in/with the respective bottom portion, the container being **characterized in that** the bottom of the outer portion, right or left, of the container comprises an emerging longitudinal portion (EM) in the volume so as to define a horizontal support plane for the damaged vehicle.

2. Container according to claim 1, comprising a right portion (CR) and a left portion (CL), one sliding inside the other according to said transverse direction.

3. Container according to one of claims 1 or 2, defining a retracted configuration wherein a right (or left) portion is inserted into the left (or right) portion and an extended configuration in which the edges (BR) of the walls of one overlap the walls of the other and are proximal to each other and wherein the edges are folded in such a way as to compress a gasket (G) arranged between them to form liquid-tight.

4. Container according to claim 1, wherein at least one of said sliding guides are configured as a hydraulic actuator having a first end stably connected to the left portion and a second end, opposite to the first end, stably connected to the right portion of the container.

5. Container according to any one of the preceding claims, wherein the openable rear wall comprises a pair of doors, each hinged to a respective side wall (WL).

6. Container according to any one of the preceding claims, further comprising a first deflection roller (DRH) or a winch (WCH) arranged approximately on the upper edge of the front wall (FWL) and a second deflection roller (DRL) associated in one part of the front wall inside the volume (A), so as to allow a towing rope (RP) to be arranged to tow the damaged vehicle (V) inside the receiving volume.

7. Container according to any one of the preceding claims, **characterized in that** it can be extended longitudinally as well as transversely.

8. Container according to claim 7, comprising a front portion (CF) and a rear portion (CP), wherein at least the rear portion is transversely extendable according to any one of claims 1 to 5, without the front wall or equipped with a front wall that can be opened and arranged, in an extended condition, to be associated with the front portion to form a single container with a single volume for receiving the damaged vehicle.

9. Container according to claim 8, wherein each of said front and rear portions are equipped with slotted hooks (HK) associated with the respective side walls (WL) and in which the container is equipped with at least one tie rod (TR) to hook said hooks and pull the front portion against the rear portion so that the respective bottoms and side walls are seamless.

10. Method of unloading a container according to any one of claims 7 to 9 from a container vehicle (TK), comprising the following steps:
- Opening the rear wall (RWR, RWL),
- lifting of the front portion of the container by means of an arm (AR) of the container vehicle, so as to induce the rear portion to slide out of the front portion and simultaneous advancement of the container vehicle,
- unloading of the front portion so that the front portion of the container is aligned and proximal to the rear portion,
- transverse expansion of the rear portion of the container so as to have the same width as the front portion of the container,
- connection of the front portion to the rear portion by at least one tie rod (TR) so that the respective bottoms and the respective side walls are seamless,
- opening of the doors (RWL, RWR) defining the rear wall of the rear portion of the container to allow the damaged vehicle (V) to enter the receiving volume (A);
- introduction of the damaged vehicle (V) in the volume.

11. Method of recovering a container according to any one of claims 7 to 9 from a container vehicle (TK), comprising the following steps:
- Disconnection of the front portion from the rear portion of the container,
- transverse retraction of at least the rear portion,
- reciprocal overlapping of the wings (RWL, RWR) defining the rear wall of the rear portion (CP) of the container,
- insertion of the rear portion of the container into the respective front portion,
- reciprocal closure or overlapping of the wings (RWL, RWR) defining the front wall (CF) of the rear portion of the container,
- recovery of the front portion, while the rear portion is inserted in the front portion, by means of the arm of a container vehicle (TK).

12. Method according to claims 10 or 11 wherein said insertion of the damaged vehicle or of the rear portion of the container is achieved by means of an associated tow rope (RP)
- to said winch (WCH), according to claim 8, or
- to said arm (RM) of the container vehicle or to a winch of a tow truck being the rope associated with a first deflection roller (DRH) and a second deflection roller (DRL) arranged respectively in an upper and lower part of the front wall of the front portion (CF) of the container so as to pull the vehicle or the rear portion of the container parallel to the ground.

## Patentansprüche

1. Abrollbehälter (C) zur Behandlung beschädigter Fahrzeuge, insbesondere beschädigter elektrifizierter Fahrzeuge, umfassend einen Boden (F) und mehrere Umfangswände (WL, FWL, RWL), die ein Volumen (A) zur Aufnahme eines beschädigten Fahrzeugs (V) definieren, wobei der Behälter eine längliche Form aufweist, die eine Längsrichtung (X) festlegt, mit einem Paar Seitenwände (WL), einer Vorderwand (FWL) und einer Rückwand (RWL), welche eine verschließbare Öffnung zum Transferieren des beschädigten Fahrzeugs in das bzw. aus dem Volumen (A) definiert, wobei der Behälter ist in einer Querrichtung relativ zu der Längsrichtung erweiterbar, und wobei der rechte Teil und der linke Teil jeweils Gleitführungen umfassen, die in den jeweiligen Bodenabschnitt integriert oder mit diesem verbunden sind; wobei der Behälter ist **dadurch gekennzeichnet, dass** der Boden des äußeren Teils, sei es der rechte oder der linke Teil des Behälters, einen in das Volumen hineinragenden Längsabschnitt (EM) umfasst, um eine horizontale Auflagefläche für das beschädigte Fahrzeug zu definieren.

2. Behälter nach Anspruch 1, umfassend einen rechten Teil (CR) und einen linken Teil (CL), wobei der eine in der Querrichtung innerhalb des anderen verschiebbar ist.

3. Behälter nach einem der Ansprüche 1 oder 2, der eine eingefahrene Konfiguration, in der ein rechter (oder linker) Teil in den linken (oder rechten) Teil eingeführt ist, sowie eine ausgefahrene Konfiguration definiert, in der die Ränder (BR) einer der Wände die Wände der anderen überlappen und einander benachbart sind, und wobei die Ränder derart gebogen sind, dass sie eine zwischen ihnen angeordnete Dichtung (G) zusammendrücken, um eine Flüssigkeitsabdichtung zu bilden.

4. Behälter nach Anspruch 1, wobei mindestens eine der Gleitführungen als ein hydraulischer Aktuator ausgebildet ist, der ein erstes Ende, das mit dem linken Teil fest verbunden ist, und ein zweites, dem ersten Ende gegenüberliegendes Ende aufweist, das mit dem rechten Teil des Behälters fest verbunden ist.

5. Behälter nach einem der vorhergehenden Ansprüche, wobei die zu öffnende Rückwand ein Paar Türen umfasst, von denen jede an einer jeweiligen Seitenwand (WL) angelenkt ist.

6. Behälter nach einem der vorhergehenden Ansprüche, ferner umfassend eine erste Umlenkrolle (DRH) oder eine Winde (WCH), die etwa am oberen Rand der Vorderwand (FWL) angeordnet ist, sowie eine zweite Umlenkrolle (DRL), die sich in einem Bereich der Vorderwand innerhalb des Volumens (A) befindet, um das Anbringen eines Abschleppseils (RP) zum Abschleppen des beschädigten Fahrzeugs (V) in das Aufnahmevolumen zu ermöglichen.

7. Behälter nach einem der vorhergehenden Ansprüche, **dadurch gekennzeichnet, dass** er sowohl in Längs- als auch in Querrichtung ausfahrbar ist.

8. Behälter nach Anspruch 7, umfassend einen vorderen Teil (CF) und einen hinteren Teil (CP), wobei entweder zumindest der hintere Teil gemäß einem der Ansprüche 1 bis 5 in Querrichtung ohne die Vorderwand ausfahrbar ist, oder mit einer Vorderwand versehen ist, die geöffnet werden kann, wobei er in einer ausgefahrenen Position mit dem vorderen Teil verbunden werden kann, um einen einzigen Behälter mit einem einzigen Aufnahmevolumen für das aufzunehmende beschädigte Fahrzeug zu bilden.

9. Behälter nach Anspruch 8, wobei sowohl der vordere als auch der hintere Teil mit Schlitzhaken (HK) ausgestattet sind, die den jeweiligen Seitenwänden (WL) zugeordnet sind, und wobei der Behälter mindestens eine Verbindungsstange (TR) aufweist, um in die Haken einzugreifen und den vorderen Teil gegen den hinteren Teil zu ziehen, sodass die jeweiligen Böden und Seitenwände nahtlos sind.

10. Verfahren zum Entladen eines Behälters nach einem der Ansprüche 7 bis 9 von einem Behälterfahrzeug (TK) aus, umfassend die folgenden Schritte:
- Öffnen der Rückwand (RWR, RWL),
- Anheben des vorderen Teils des Behälters mittels eines Arms (AR) des Behälterfahrzeugs, um den hinteren Teil aus dem vorderen Teil herauszuschieben, wobei sich das Behälterfahrzeug gleichzeitig vorwärts bewegt,
- Entladen des vorderen Teils, sodass der vordere Teil des Behälters in einer Linie mit dem hinteren Teil und in dessen Nähe ausgerichtet ist,
- Quererweitern des hinteren Teils des Behälters, sodass dieser die gleiche Breite wie der vordere Teil des Behälters aufweist,
- Verbinden des vorderen Teils mit dem hinteren Teil mittels mindestens einer Verbindungsstange (TR), sodass die jeweiligen Böden und die jeweiligen Seitenwände nahtlos sind,
- Öffnen der Türen (RWL, RWR), die die Rückwand des hinteren Teils des Behälters definieren, um dem beschädigten Fahrzeug (V) die Einfahrt in das Aufnahmevolumen (A) zu ermöglichen,
- Einfahren des beschädigten Fahrzeugs (V) in das Volumen.

11. Verfahren zur Aufnahme eines Behälters nach einem der Ansprüche 7 bis 9 aus einem Behälterfahrzeug (TK), umfassend die folgenden Schritte:
- Trennen des vorderen Teils vom hinteren Teil des Behälters,
- seitliches Herausziehen zumindest des hinteren Teils,
- gegenseitiges Überlappen der Flügel (RWL, LWR), die die Rückwand des hinteren Teils (CP) des Behälters definieren,
- Einführen des hinteren Teils des Behälters in den jeweiligen vorderen Teil,
- gegenseitiges Schließen oder Überlappen der Flügel (RWR, LWR), die die Vorderwand (CF) des hinteren Teils des Behälters definieren,
- Aufnehmen des vorderen Teils, während der hintere Teil in den vorderen Teil, mittels des Arms eines Behälterfahrzeugs (TK), eingeführt wird.

12. Verfahren nach Anspruch 10 oder 11, wobei das Einführen des beschädigten Fahrzeugs oder des hinteren Teils des Behälters mittels eines zugeordneten Abschleppseils (RP) erreicht wird, das mit Folgendem verbunden ist:
- der Winde (WCH) nach Anspruch 8, oder
- dem Arm (RM) des Behälterfahrzeugs oder einer Winde eines Abschleppwagens, wobei das Seil über eine erste Umlenkrolle (DRH) und eine zweite Umlenkrolle (DRL) geführt wird, die jeweils in einem oberen bzw. unteren Teil der Vorderwand des vorderen Teils (CF) des Behälters angeordnet sind, um das Fahrzeug oder das hintere Teil des Behälters parallel zum Boden zu ziehen.

## Revendications

1. Récipient à déroulement (C) pour le traitement de véhicules endommagés, notamment des véhicules électrifiés endommagés, comprenant un fond (F) et plusieurs parois périmétriques (WL, FWL, RWL) qui définissent un volume (A) pour recevoir un véhicule endommagé (V) et dans lequel le récipient a une forme longitudinale définissant une direction longitudinale (X) avec une paire de parois latérales (WL), une paroi avant (FWL) et une paroi arrière (RWL) qui définit une ouverture refermable pour transférer le véhicule endommagé dans ou hors du volume (A), le récipient étant extensible dans une direction transversale par rapport à ladite direction longitudinale et dans lequel la partie droite e la partie gauche comprennent des guide coulissants incorporés ou connectés dans/avec la partie de fond respective, le récipient étant **caractérisé en ce que** le fond de la partie externe, droite ou gauche, du récipient comprend une partie longitudinale émergente (EM) dans le volume, de manière à définir un plan de support horizontal pour le véhicule endommagé.

2. Récipient selon la revendication 1, comprenant une partie droite (CR) et une partie gauche (CL), l'une coulissant à l'intérieur de l'autre selon ladite direction transversale.

3. Récipient selon l'une des revendications 1 ou 2, définissant une configuration rétractée dans laquelle une partie droite (ou gauche) est insérée dans la partie gauche (ou droite) et une configuration étendue dans laquelle les bords (BR) de l'une des parois chevauchent les parois de l'autre et sont proximaux l'un à l'autre et dans laquelle les bords sont pliés de telle sorte qu'ils compriment un joint (G) disposé parmi ceux-ci pour former une étanchéité aux liquides.

4. Récipient selon la revendication 1, dans lequel au moins l'un desdits guides coulissants est configuré comme un actionneur hydraulique présentant une première extrémité connectée de manière stable à la partie gauche et une deuxième extrémité, opposée à la première extrémité, connectée de manière stable à la partie droite du récipient.

5. Récipient selon l'une quelconque des revendications précédentes, dans lequel la paroi arrière ouvrable comprend une paire de portes, chacune articulée à une paroi latérale respective (WL).

6. Récipient selon l'une quelconque des revendications précédentes, comprenant en outre un premier rouleau de renvoi (DRH) ou un treuil (WCH) disposé environ sur le bord supérieur de la paroi avant (FWL) et un deuxième rouleau de renvoi (DRL) associé dans une partie de la paroi avant à l'intérieur du volume (A), afin de permettre la mise en place d'un câble de remorquage (RP) pour remorquer le véhicule endommagé (V) à l'intérieur du volume de réception.

7. Récipient selon l'une quelconque des revendications précédentes, **caractérisé en ce qu'**il peut s'étendre soit en sens longitudinal que transversal.

8. Récipient selon la revendication 7, comprenant une partie avant (CF) et une partie arrière (CP), dans lequel au moins la partie arrière peut s'étendre transversalement selon l'une des revendications 1 à 5, sans la paroi avant ou être munie d'une paroi avant qui peut être ouverte et disposée, dans une condition étendue, pour être associée à la partie avant pour former un seul récipient avec un seul volume de réception du véhicule endommagé.

9. Récipient selon la revendication 8, dans lequel chacune desdites parties avant et arrière est équipée avec des crochets à fente, associés à des parois latérales respectives (WL), et dans lequel le récipient est équipé avec au moins une barre d'accouplement (TR), pour accrocher les crochets et tirer la partie avant contre la partie arrière, de sorte que les fonds respectifs et les parois latérales sont sans couture.

10. Procédé de déchargement d'un récipient selon l'une quelconque des revendications 7 à 9, a partir d'un véhicule récipient (TK), comprenant les étapes suivantes :
- ouvrir la paroi arrière (RWR, RWL)
- soulever la partie avant du récipient au moyen d'un bras (AR) du véhicule récipient, pour faire coulisser la partie arrière hors de la partie avant et avec un avancement simultané du véhicule récipient
- décharger la partie avant de sorte que la partie avant du récipient soit alignée et proche de la partie arrière,
- développer transversalement la partie arrière du récipient pour avoir la même largeur de la partie avant du récipient,
- relier la partie avant à la partie arrière au moyen d'au moins une barre d'accouplement(TR), de sorte que les fonds respectifs et les parois latérales respectives soient sans couture,
- ouvrir les portes (RWL, RWR), définissant la paroi arrière de la partie arrière du récipient pour permettre au véhicule endommagé (V) d'entrer dans le volume de réception (A);
- introduire le véhicule endommagé (V) dans le volume.

11. Procédé de récupération d'un véhicule récipient (TK) selon l'une quelconque der revendications 7 à 9, comprenant les étapes suivantes :
- déconnecter la partie avant de la partie arrière du récipient,
- retirer transversalement au moins la partie arrière,
- chevaucher réciproquement les ailes (RWL, LWR) définissant la paroi arrière de la partie arrière (CP) du récipient,
- insérer la partie arrière du récipient à l'intérieur de la partie avant respective,
- fermer réciproquement ou chevaucher les ailes (RWR, LWR) définissant la paroi avant (CF) de la partie arrière du récipient,
- récupérer la partie avant, tandis que la partie arrière est insérée dans la partie avant, au moyen du bras d'un véhicule récipient (TK).

12. Procédé selon la revendication 10 ou 11, dans lequel ladite insertion du véhicule endommagé ou de la partie arrière du récipient est obtenue par une corde de remorquage (RP) associée,
- audit treuil (WCH) selon la revendication 8, ou
- audit bras (RM) du véhicule récipient ou à un treuil d'un camion de remorquage, la corde étant associée à un premier rouleau de renvoi (DRH) er è un deuxième rouleau de renvoi (DRL), disposés respectivement dans une partie supérieure et inférieure de la paroi avant de la partie avant (CF) du récipient, pour tirer le véhicule ou la partie arrière du récipient parallèle au sol.
